# EUROPÄISCHE PATENTANMELDUNG

(11) **EP 1 114 960 A2**
(43) Veröffentlichungstag der Anmeldung: **11.07.2001**
(21) Anmeldenummer: 00127783.9
(22) Anmeldetag: 19.12.2000
(51) Int. Cl.: F16L 59/06, E04B 1/80, B65D 81/38, E04F 13/00

(54) **Doppelwandiger Isolierkörper und Verfahren zu seiner Herstellung**

(30) Priorität: 06.01.2000 DE 10000260
(71) Anmelder: Thyssen Vakuum-Isolationstechnik GmbH, 26725 Emden (DE)
(72) Erfinder: Nowara, Ekkehard, 26736 Krummhörn (DE)
(74) Vertreter: Cohausz & Florack

(57) **Zusammenfassung**

Die Erfindung betrifft einen Isolierkörper und ein Verfahren zu seiner Herstellung. Ein solcher Isolierkörper besteht aus zwei Wänden 1,2 aus Blech, einem die Wände 1,2 am Rand dicht verbindenden Dichtungsprofil 3 und formsteifem Dichtungsmaterial 4, insbesondere aus offenporigem Schaumstoff, das in dem von den Wänden 1,2 und dem daran dicht angeschlossenen Dichtungsprofil 3 gebildeten und evakuierten Hohlraum untergebracht ist. Das Dichtungsmaterial 4 ist formsteif und stützt die Wände 1,2 ab. Um die Isolationswirkung des Isolierkörpers auch im Randbereich zu verbessern, ist vorgesehen, daß der dichte Anschluß des Dichtungsprofils 3 an die Wände 1,2 als Heißversiegelung ausgeführt ist und das Dichtungsprofil selbst nicht aus Blech, sondern aus einem Material mit niedrigerer Wärmeleitfähigkeit, kleiner Dampfdurchlässigkeit und guten Heißsiegeleigenschaften besteht. Die Herstellung eines solchen Isolierkörpers erfolgt in einer Vakuumkammer bei zunächst offenem, mit dem Isoliermaterial 4 bestückten Hohlraum und Heißsiegelung der Randbereiche unter Vakuum nach anschließendem Schließen des Hohlraums.

## Beschreibung

Die Erfindung betrifft einen doppelwandigen Isolierkörper in Platten-, Schalen-, Topf- oder Box-Form, dessen beide aus Blechen bestehende Wände gemeinsam mit einer zwischen den Blechen an deren umlaufenden Rand dicht angeschlossenen Dichtungsprofil einen evakuierten Hohlraum umschließen, in dem die Wände abstützendes Isolationsmaterial angeordnet ist.

Ein solcher Isolierkörper in Plattenform ist bekannt ("Forum" Technische Mitteilungen ThyssenKrupp 2/1999, Seiten 42 bis 45, ISSN 1438-5635). Bei diesem Isolierkörper besteht das als Rahmen ausgebildete, U-förmige Dichtungsprofil wie die Wände aus Blech. An ihren Kanten sind die Wände und das Dichtungsprofil miteinander metallisch verschweißt. Für die Bestimmung des Wärmedurchgangskoeffizienten eines solchen Isolierkörpers ist der Einfluß der Randverbindung der Wände und des Dichtungsprofils wegen des metallischen Dichtungsprofils und der metallischen Schweißverbindung von wesentlicher Bedeutung. Um diesen Einfluß möglichst klein zu halten, ist das Dichtungsprofil optimiert, das heißt, es hat eine möglichst kleine Dicke.

Die Herstellung eines solchen Isolierkörpers erfolgt in der Weise, daß die einzelnen Teile, und zwar die Wände, das Dichtungsprofil und das Isolationsmaterial zusammengesetzt und dann die Wände mit dem Dichtungsprofil verschweißt werden. Anschließend wird über einen in einem der Wände vorgesehenen Evakuierflansch der Hohlraum evakuiert. Um den Hohlraum möglichst optimal evakuieren zu können, verwendet man als Isolationsmaterial ein mikroporöses Stützmaterial mit einem möglichst hohen Porenanteil von bis zu 90% des Hohlraumvolumens. Dadurch läßt sich die Wärmeleitfähigkeit bei einem Restgasdruck von weniger als 0,1 mbar im Vergleich zum Atmosphärendruck um mehr als den Faktor 10 reduzieren.

Der Erfindung liegt die Aufgabe zugrunde, einen doppelwandigen Isolierkörper der eingangs genannten Art zu schaffen, der eine geringere Wärmeleitfähigkeit als konventionelle Isolierkörper hat und der sich zumindest dann leichter herstellen läßt, wenn er als Platte oder Schale ausgeführt ist.

Diese Aufgabe wird bei einem doppelwandigen Isolierkörper der eingangs genannten Art dadurch gelöst, daß der Wandanschluß des Dichtungsprofils, das aus einem nicht metallischen Material mit schlechter Wärmeleitfähigkeit, kleiner Dampfdurchlässigkeit und guten Heißsiegeleigenschaften besteht, als großflächige Heißversiegelung ausgeführt ist.

Der erfindungsgemäße Isolierkörper, der in verschiedenen Formen ausgeführt sein kann, zeichnet sich aufgrund seiner neuen Randverbindung der Wände durch eine verbesserte Isolationsfähigkeit aus, denn die Abkehr von der metallischen Schweißverbindung, die bei einem metallischen Dichtungsprofil üblich war, erlaubt es, über die Auswahl des Materials des Dichtungsprofils eine Optimierung der Randverbindung der Wände hinsichtlich einer möglichst kleinen Wärmeleitfähigkeit zu verwirklichen, wobei gleichzeitig die großflächige Heißversiegelung wegen des langen Weges Atmosphäre/Hohlraum durch die Heißsiegelnaht und die kleine Dampfdurchlässigkeit des Dichtungsprofils dauerhaft ein hohes Vakuum gewährleisten. Die kleine Dampfdurchlässigkeit des Dichtungsprofils läßt sich auf einfache Art und Weise dadurch erreichen, daß in dem Dichtungsprofil als Dampfsperre eine Metallfolie integriert ist. Da die Metallfolie nur die Aufgabe hat, als Dampfsperre zu wirken und sie keine metallische Verbindung zu den Wänden hat, kann sie nicht als Wärmebrücke zwischen den Wänden wirken.

Nach einer Ausgestaltung der Erfindung hat das Dichtungsprofil einen im wesentlichen U-förmigen Querschnitt und ist mit einem Versteifungsmaterial ausgefüllt. Auf diese Art und Weise läßt sich problemlos auch der Randbereich des Isolierkörpers versteifen, so daß der Isolierkörper auch in diesem sonst nicht abgestützten Bereich mechanischen Belastungen besser standhält. Ein weiterer Vorteil besteht darin, daß in dem Versteifungsmaterial Kupplungselemente für benachbarte Isolierkörper eingebettet sein können. Dieser Einbau von Kupplungselementen erlaubt es, benachbarte Platten zu verbinden, ohne daß die Kupplungselemente selbst als Wärmebrücke wirken. Mit ihnen ist auch ein blinder Anschluß benachbarter Isolierkörper möglich.

Die Isolationsqualität des Isolierkörpers hängt wesentlich von der Struktur des Isolationsmaterials ab. Das Isolationsmaterial sollte deshalb neben seiner wegen des Vakuums im Hohlraum notwendigen Stützfunktion der Wände ein möglichst geringes Volumen haben. Auch sollte es den Aufbau eines möglichst hohen Vakuums erlauben. Bewährt haben sich mikroporöse Stützmaterialien, deren Porenanteil bis zu 90% des Hohlraumvolumens erreicht. Sofern ein Schaumstoff verwendet wird, sollte er offenporig sein.

Für die Heißversiegelung zwischen den Wänden und dem Dichtungsprofil gibt es mehrere Möglichkeit, die einzeln oder kombiniert angewendet werden können. Vorzugsweise sind die Wände, zumindest im Bereich der Heißversiegelung, mit einer heißsiegelfähigen Beschichtung versehen. In entsprechender Weise kann auch das Dichtungsprofil mit einer heißsiegelfähigen Beschichtung versehen sein oder insgesamt aus einem heißsiegelfähigen Material bestehen. Denkbar ist allerdings auch, daß zwischen den Wänden und dem Dichtungsprofil heißsiegelfähige Folien eingelegt sind.

Während die Herstellung konventioneller Isolierkörper in Plattenform verhältnismäßig aufwendig ist, weil die Platten zunächst komplettiert und an ihren Randbereichen metallisch verschweißt werden, um anschließend über eine Öffnung in einer der Wände den Hohlraum zwischen den Platten und dem Dichtungsprofil evakuieren zu können, wird erfindungsgemäß ein anderer Weg vorgeschlagen. Nach dem erfindungsgemäßen Verfahren wird nämlich die Heißversiegelung des Wandanschlusses an dem aus Einzelteilen zusammengesetzten Isolierkörper unter Vakuum vorgenommen. Das hat den Vorteil, daß bei noch offenem Hohlraum sich leicht ein Vakuum herstellen läßt, zum Beispiel indem der komplettierte, aber noch nicht verschweißte Isolierkörper in einer Vakuumkammer untergebracht wird. Die Heißversiegelung erfolgt dann in der Vakuumkammer. Es erübrigt sich also das Vorsehen eines Vakuumanschlusses in einer Wand und sein anschließendes Verschließen. Auch bedarf es für den mechanischen Zusammenhalt der Teile des Isolierkörpers nicht länger deren Fixierung durch eine Schweißnaht, weil die Heißversiegelung unter Vakuum erfolgt und die Teile aufgrund des auf ihnen lastenden Drucke sich aneinander abstützen. Dabei hat die Heißsiegelnaht nur die Funktion den evakuierten Hohlraum abzudichten.

Im einzelnen wird dies nach einer Ausgestaltung der Erfindung in der Weise durchgeführt, daß nach Bestückung einer Wand mit Dichtungsprofil und Isolationsmaterial diese Teile in einer Kammer unter Vakuum gesetzt werden und erst dann unter Aufrechterhaltung des Vakuums die Bestückung mit der zweiten Wand und danach die Heißversiegelung erfolgt.

Im folgenden wird die Erfindung anhand einer Zeichnung näher erläutert. Im einzelnen zeigen:
- Figur 1: einen doppelwandigen Isolierkörper in Plattenform im Querschnitt,
- Figur 2: den Isolierkörper gemäß Figur 1 im Querschnitt im Randbereich und in vergrößerter Darstellung u n d
- Figur 3: eine Anlage zur Herstellung des Isolierkörpers gemäß Figur 1 in schematisierter Darstellung.

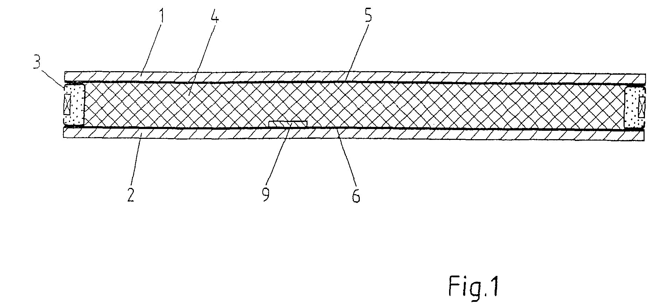

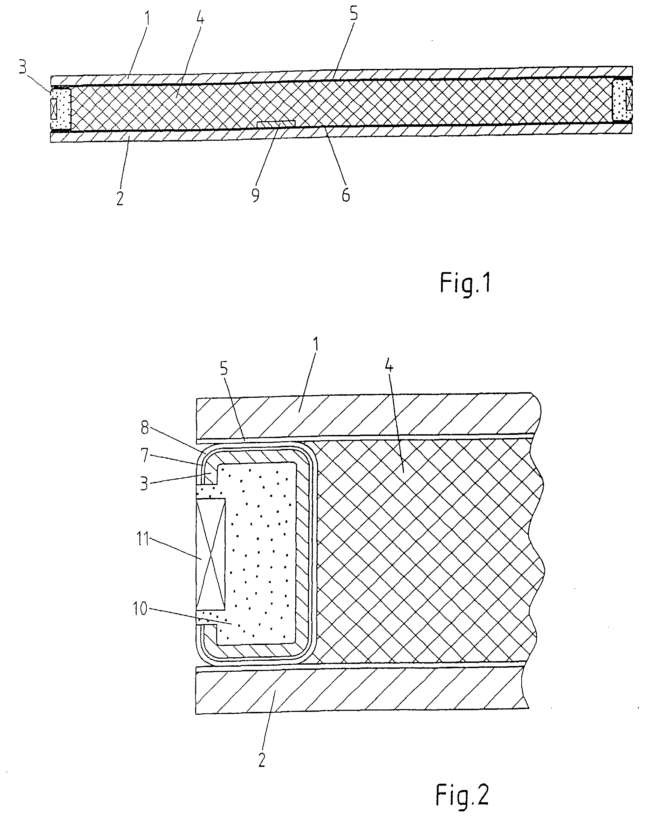

Der in den Figuren 1 und 2 dargestellte Isolierkörper hat Plattenform. Andere Formen von Isolierkörpern, wie längs einer oder zwei Achsen gewölbte Schalen, Töpfe mit kreisförmigem, ovalem oder eckigem Querschnitt, oder Boxen in Quaderform sind denkbar. Ihre Form und Zusammenstellung in Modulbauweise hängt vom gewünschten Einsatzgebiet ab. Als Beispiele seien LKW-Aufbauten, Container, Transportboxen, Kühlzellen, Fassadenelemente und Kühlgeräte genannt.

Der in den Figuren 1 und 2 dargestellte Isolierkörper in Form einer Platte besteht aus zwei Wänden 1,2 aus Stahlblech, insbesondere Edelstahlblech, einem umlaufenden, als Rahmen ausgebildeten Dichtungsprofil 3 und Isolationsmaterial 4, das in dem von den Wänden 1,2 und dem Dichtungsprofil 3 umschlossenen Hohlraum untergebracht ist. Die Wände 1,2 sind innenseitig, zumindest im Bereich des Dichtungsprofils 3, im Ausführungsbeispiel sogar vollflächig mit einem heißsiegelfähigen Material 5,6 beschichtet. Das im wesentlichen U-förmige Dichtungsprofil 3 besteht aus Kunststoff und ist mit einer Metallfolie 7 als Dampfsperre kaschiert und wie die Wände 1,2 mit einem heißsiegelfähigen Material 8 beschichtet. Da das Dichtungsprofil 3 im wesentlichen U-förmig ist, ergibt sich an seinen Schenkeln eine großflächige Heißsiegelnaht, die von der Atmosphäre zum Hohlraum einen langen Weg in der Größenordnung von 20mm darstellt. Deshalb und wegen der zum Hohlraum hin gelegenen Metallfolie 7 als Dampfsperre kann aus der Atmosphäre keine Luft in den Hohlraum gelangen.

Das Isolationsmaterial 4 im Hohlraum ist ein offenporiger Schaumstoff hoher Steifigkeit. Dieser Schaumstoff hat zwei Funktionen. Zum einen stützt er die vom Atmosphärendruck gegenüber dem evakuierten Hohlraum druckbelasteten Wände 1,2 ab. Zum anderen läßt sich der Hohlraum bei dem offenporigen Schaumstoff vollständig evakuieren, so daß die Isolationswirkung des Hohlraums optimal ist. Vorsorglich kann im Hohlraum noch Gittermaterial 9 zur Absorption von Restluft vorgesehen sein.

Das Dichtungsprofil 3 ist mit formsteifem Isolationsmaterial 10 ausgefüllt, was die Isolationswirkung im Bereich der diesbezüglich kritischen Randverbindung der Wände 1,2 verbessert. Außerdem dient das lsolationsmaterial 10 zur Halterung von in ihm eingebetteter Kupplungselemente 11 zur Verbindung benachbarter Isolierkörper.

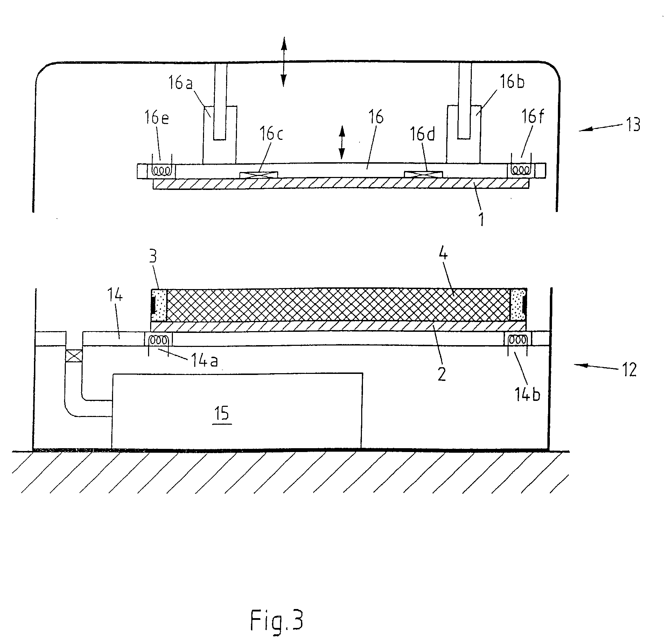

Die Herstellung eines Isolierkörpers in Plattenform erfolgt vorzugsweise in einer Vakuumkammer. In Figur 3 ist eine solche Vakuumkammer dargestellt. Die Vakuumkammer besteht aus einem unteren Kammerteil 12 und einem.als in der Höhe verfahrbare Haube ausgebildeten oberen Kammerteil 13. Das untere Kammerteil 12 weist einen Auflagetisch 14 auf, unter dem eine Vakuumpumpe 15 untergebracht ist. Der Auflagetisch 14 ist mit Heizelementen 14a, 14b versehen.

An dem Oberteil 13 ist eine mit Hubelementen 16a, 16b aufgehängte und mit Elektromagneten 16c,16d bestückte Halteplatte 16 angeordnet. In der Halteplatte 16 sind ebenfalls Heizelemente 16e,16f angeordnet.

Für die Herstellung wird zunächst die eine Wand 2 mit aufgelegtem rahmenartigen Dichtungsprofil 3 und eingelegtem Dichtungsmaterial 4 auf den Auflagetisch 14 gelegt derart, daß sich das Dichtungsprofil 3 mit den Heizelementen 14a, 14b deckt. An der Halteplatte 16 wird die andere Wand 1 angelegt und mit den Magneten 16c, 16d gehalten. Anschließend wird das haubenartige Oberteil 13 heruntergefahren und dicht am Unterteil 12 angeschlossen. Bei angehobener Halteplatte 16 wird die Vakuumpumpe 15 in Betrieb gesetzt und die gesamte Vakuumkammer unter Vakuum gesetzt. Dabei wird wegen der Offenporigkeit des Schaumstoffes auch das daraus bestehende Isolationsmaterial 4 problemlos evakuiert. Nach Aufbau des gewünschten Vakuums in der Kammer wird mittels der Hubelemente 16a,16b die Wand 1 auf das Dichtungsprofil 3 und das Isolationsmaterial 4 aufgelegt und angedrückt. Anschließend werden die Heizelemente 14a, 14b, 16e, 16f aktiviert und die beidseitige großflächige Heißversiegelung hergestellt. Nach Erkalten der heißversiegelten Flächen ist der Isolierkörper fertig.

## Patentansprüche

1. Doppelwandiger Isolierkörper in Platten-, Schalen-, Topf- oder Box-Form, dessen beide aus Blechen bestehende Wände (1,2) gemeinsam mit einer zwischen den Blechen an deren umlaufenden Rand dicht angeschlossenen Dichtungsprofil (3) einen evakuierten Hohlraum umschließen; in dem die Wände (1,2) abstützendes Isolationsmaterial (4) angeordnet ist,
**dadurch gekennzeichnet,** daß der Wandanschluß des Dichtungsprofils (3), das aus einem nicht metallischen Material mit niedriger Wärmeleitfähigkeit, kleiner Dampfdurchlässigkeit und guten Heißsiegeleigenschaften besteht, als großflächige Heißversiegelung ausgeführt ist.

2. Isolierkörper nach Anspruch 1,
**dadurch gekennzeichnet**, daß in dem Dichtungsprofil (3) als Dampfsperre eine Metallfolie (7) integriert ist.

3. Isolierkörper nach Anspruch 1 oder 2,
**dadurch gekennzeichnet,** daß das Dichtungsprofil (3) einen im wesentlichen U-förmigen Querschnitt aufweist und mit einem Versteifungsmaterial (10) ausgefüllt ist.

4. Isolierkörper nach Patentanspruch 3,
**dadurch gekennzeichnet,** daß in dem Versteifungsmaterial (10) Kupplungselemente (11) für benachbarte Isolierkörper eingebettet sind.

5. Isolierkörper nach einem der Ansprüche 1 bis 4,
**dadurch gekennzeichnet,** daß das Versteifungsmaterial (10) eine niedrige Wärmeleitfähigkeit hat.

6. Isolierkörper nach einem der Ansprüche 1 bis 3,
**dadurch gekennzeichnet**, daß das Isolationsmaterial (4) ein offenporiger Schaumstoff ist.

7. Isolierkörper nach einem der Ansprüche 1 bis 6,
**dadurch gekennzeichnet**, daß die Wände (1,2) zumindest im Bereich der Heißversiegelung mit einer heißsiegelfähigen Beschichtung (5, 6) versehen sind.

8. Isolierkörper nach einem der Ansprüche 1 bis 7,
**dadurch gekennzeichnet**, daß das Dichtungsprofil (3) zumindest im Bereich der Heißversiegelung mit einer heißsiegelfähigen Beschichtung (8) versehen ist oder aus heißsiegelfähigem Material besteht.

9. Verfahren zum Herstellen eines Isolierkörpers nach einem der Ansprüche 1 bis 5,
**dadurch gekennzeichnet,** daß die Heißversiegelung des Wandanschlusses an dem aus seinen Einzelteilen zusammengesetzten und unter Vakuum gesetzten Isolierkörper unter Vakuum erfolgt.

10. Verfahren zum Herstellen eines Isolierkörpers in Form einer Platte oder Schale nach Anspruch 9,
**dadurch gekennzeichnet**, daß nach Bestückung einer Wand mit Dichtungsprofil und Isoliermaterial diese Teile in einer Kammer unter Vakuum gesetzt werden und erst dann unter Aufrechterhaltung des Vakuums die Bestückung mit der zweiten Wand erfolgt.
